# EUROPEAN PATENT APPLICATION

(11) **EP 0 671 197 A1**
(43) Date of publication of application: **13.09.1995**
(21) Application number: 94830350.8
(22) Date of filing: 11.07.1994
(51) Int. Cl.: B01D 21/02

(54) **Settler for liquid to be purified**

(30) Priority: 08.03.1994 IT BS940015
(71) Applicant: F-Z FANTONI S.p.A., I-25081 Bedizzole (Brescia) (IT)
(72) Inventor: Fantoni, Silvano, I-25081 Bedizzole (Brescia) (IT)
(74) Representative: Manzoni, Orazio

(57) **Abstract**

A settler for liquids to be purified comprising a tank (11) which embodies a plurality of hollow truncated-cone shaped elements (15) stacked coaxially with their minimum diameter facing the tank bottom and delimiting intermediate passages (16) which extend conically from the element centre holes towards the periphery of the tank. In proximity to the lower truncated-cone shaped element, an intermediate horizontal partition (19) is provided, which divides the tank into a lower chamber (A), to which an inlet duct for the delivery of dirty liquid is connected, and an upper chamber (B) to which an outlet duct for purified liquid is connected.

## Description

The present invention concerns gravity settlers-decanters for liquids to be purified, usually water containing sediment and heavier substances.

In general, the known settlers comprise a vertical tank provided with a conical bottom, i.e. hopper shaped, and inside planes projecting from the walls towards the centre. The liquid to be purified delivered into the tank, with the help of the planes which prevent sediment from emerging, progressively releases the heaviest particles, which deposit onto the conical bottom for being evacuated, whereas the purified fluid rises to the surface and is collected from the top of the tank.

In these known settlers, sediment substantially deposits only by gravity decantation. Their efficiency is rather low and, for treating considerable quantities of liquid, tanks of great capacity must be installed, which are disadvantageously bulky and expensive.

The aim of the present invention is to obviate said disadvantageous characteristics by providing a settler of enhanced efficiency and therefore suitable for permitting purification of liquid in greater quantities, though having the same dimensions as known settlers. In other words, a settler according to the present invention will produce the same quantity of purified liquid as any know settlers, though with a much smaller tank and therefore smaller dimensions and lower price.

Another object of the invention is to provide a settler for liquids to be purified in which sediment settling may be achieved in two ways: by gravity and through a multiplicity of inclined planes, which intercept the liquid rising and allow better and quicker treatment of liquid.

A further and not lesser object of the invention is to provide a settling system for fluids to be purified which is suitable for being applied both to new and, advantageously, traditional existing settlers in order to enhance their efficiency, with the possibility of expanding filtering surfaces according to requirements.

The settler according to the present invention is as claimed in claim 1. Further details will become apparent from the continuation of the description, with reference to the accompanying drawings, in which:
Figure 1 shows a vertical sectional view of the settler according to the invention; and
Figure 2 shows a partial sectional view of a detail according to arrows II-II in Figure 1.

The settler according to the invention comprises a vertical-axis cylindrical tank 11 having a conical bottom 12, i.e. hopper shaped, with an outlet 13 for sediment. The tank 11 is made, for example, in fibreglass and is fixed on supporting legs 14.

A plurality of hollow truncated-cone shaped elements 15 in fibreglass as well, whose maximum diameter is smaller than the tank diameter, are provided in the tank 11, in proximity to upper part thereof. Said truncated-cone shaped elements 15 are stacked coaxially with their minimum diameters facing the tank bottom, but are spaced parallelly and vertically so as to define intermediate passages 16 which extend conically from the element centre holes outwards.

The truncated-cone elements 15 may be provided with side tongues 15' connected through connecting rods 17 with spacers 18 interposed, which make for easier assembly in stacked and spaced position.

A horizontal partition 19 located proximate to and around the lower truncated-cone shaped element divides the tank into a lower chamber A and an upper chamber B and helps keep the element assembly 15 properly centred in the tank. A collecting channel 20 for purified water may be provided around the upper truncated-cone element, proximate to the top thereof. An inlet duct 21 for the delivery of liquid to be purified is connected to the lower part of the tank 11, i.e. below the horizontal partition 19; an outlet duct 22 for purified water is connected to the top channel 20.

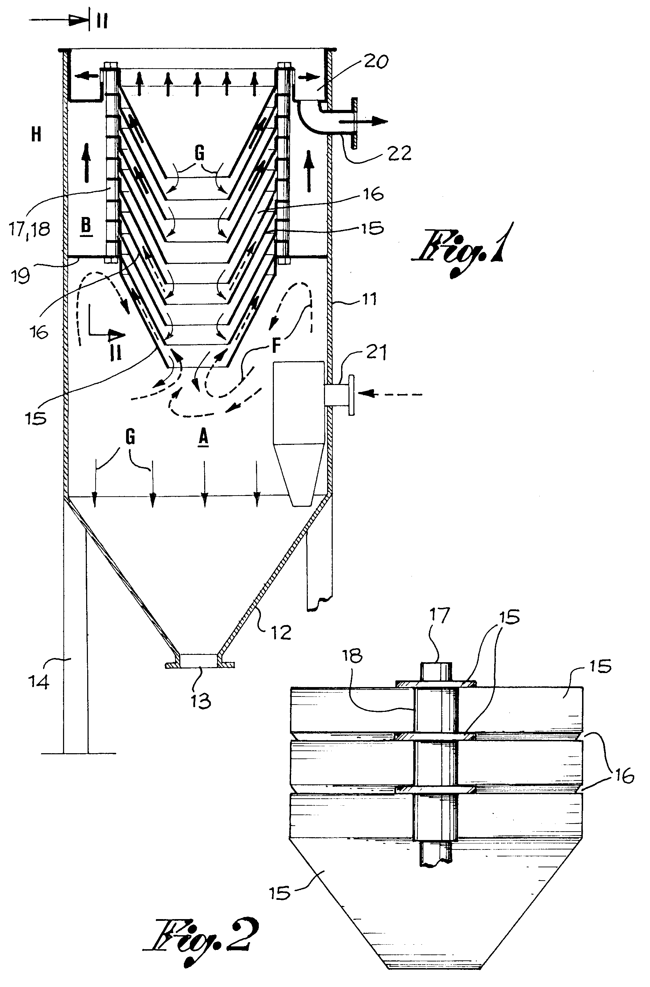

The liquid to be treated, in general water, flows into the lower chamber A of the tank and progressively rises by passing through the conical passages 16 provided in the upper part B of the tank according to arrows F drawn in section line in Figure 1.

The lower chamber A of the tank 11 functions as a gravity decanter for the separation of the heaviest particles transported by the liquid. The lightest particles of impurities are forced through the passages 16, i.e. along the inclined planes defined by the truncated-cone shaped elements 15, where they agglomerate and - once grown in size - precipitate to the bottom, where they finally deposit. Arrows G in Figure 1 indicates the sediment which precipitates to the tank bottom.

Purified liquid rises into the upper chamber B and to the surface according to arrows H in bold lines, and may be collected through the outlet duct 22.

The objects mentioned are achieved by the above described settler, which, in its details, is susceptible to modifications and variations all of which are within the scope of the inventive concept. Thus, as an example, the truncated-cone shaped elements may be assembled in any other adequate way, and a duct arranged axially, from above, with respect to the tank and extending coaxially through the truncated-cone shaped elements to the lower part of the tank may be provided for the delivery of liquid to be treated instead of a side duct 21.

## Claims

1. A settler for liquids to be purified comprising a vertical-axis tank (11) having a conical bottom (12) with a bottom outlet (13) for sediment, provided with an inlet duct (21) for the delivery of liquid to be treated and an outlet duct (22) for purified liquid, characterized in that said tank (11) includes a plurality of hollow, truncated-cone shaped elements (15) whose maximum diameter is smaller than the tank diameter, stacked coaxially with the minimum diameter facing the tank bottom and spaced parallelly and vertically so as to define intermediate passages (16) which extend conically from the element centre holes outwards, and in that, proximate to the lower truncated-cone shaped element, an intermediate horizontal partition (19) is provided which divides the tank into a lower chamber (A) and an upper chamber (B), the inlet duct (21) for the delivery of dirty liquid opening in proximity to said lower chamber (A) while the outlet duct (22) for purified liquid is connected to the upper chamber (B) of the tank.

2. A settler as claimed in claim 1, wherein said truncated-cone shaped elements (15) are connected to one another and kept spaced by means of side connecting rods (17) and spacers (18), and wherein the whole assembly of truncated-cone elements is centred in the tank by said intermediate partition (19) and by a channel-shaped element (20) located at the top of said elements, the outlet duct (22) for purified liquid being connected to said channel-shaped element.

3. A settler as claimed in claims 1 and 2, wherein all the passages (16) defined by the truncated-cone shaped elements (15) open on the upper chamber (B) of the tank.

4. A settler as claimed in the previous claims, wherein the inlet duct (21) for the delivery of dirty liquid is connected to the tank laterally or extends from above coaxially with respect to the truncated-cone shaped elements to the lower chamber (A) of the tank.
